# EUROPÄISCHE PATENTSCHRIFT

(11) **EP 3 097 381 B1**
(45) Veröffentlichungstag und Bekanntmachung des Hinweises auf die Patenterteilung: **24.03.2021**
(21) Anmeldenummer: 14811772.4
(22) Anmeldetag: 05.12.2014
(51) Int. Cl.: G01B 7/00, G01D 5/20, H03H 7/24

(54) **SYSTEM UND VERFAHREN ZUR ERFASSUNG DER RELATIVEN LAGE ZWEIER TEILE**
SYSTEM AND METHOD FOR DETECTING THE RELATIVE POSITIONS OF TWO PARTS
SYSTÈME ET PROCÉDÉ DE DÉTECTION DE LA POSITION RELATIVE DE DEUX PIÈCES

(30) Priorität: 20.01.2014 DE 102014000503
(43) Veröffentlichungstag der Anmeldung: 30.11.2016
(73) Patentinhaber: SEW-EURODRIVE GmbH & Co. KG, 76646 Bruchsal (DE)
(72) Erfinder: KUTZ, Michael, 76661 Philippsburg (DE); JAHN, Nils-Malte, 69124 Heidelberg-Kirchheim (DE); BÖCKLE, Jürgen, 76646 Bruchsal (DE); GEISSLER, Michael, 76709 Kronau (DE); GEHLERT, André, 76646 Bruchsal (DE)
(86) Internationale Anmeldenummer: PCT/EP2014/003262
(87) Internationale Veröffentlichungsnummer: WO 2015/106785

(56) Entgegenhaltungen:
- EP-A1- 0 022 363
- WO-A1-2005/029699
- DE-A1- 2 943 932
- DE-A1- 3 309 089
- DE-A1- 10 053 373
- DE-A1-102005 052 637
- US-A- 2 862 200
- US-A1- 2011 101 968
- US-B1- 6 259 249

## Beschreibung

Die Erfindung betrifft ein System zur Erfassung der relativen Lage zweier Teile.

Es ist allgemein bekannt, dass eine Kreisposition durch Angabe eines Sinuswertes und eines Kosinuswertes eindeutig bestimmbar ist, insbesondere auch wenn der Sinuswert und Kosinuswert Radius-behaftet ist.

Aus der US 6 259 249 B1 ist ein stationäres System mit einer Strecke, einer Wechselspannungsquelle und Sensoren bekannt.

Aus der DE 10 2005 052 637 A1 ist eine monolithisch integrierte Schaltung bekannt.

Aus der US 2011/101968 A1 ist ein induktiver Positionssensor bekannt, wobei auf dem drehenden Teil nur zwei Schwingkreise angeordnet sind.

Aus der WO 2005/029699 A1 ist eine Vorrichtung zur berührungslosen Energieübertragung bekannt, die einen Gyrator als Wandler von einem stromquellenartigen Verhalten in ein spannungsquellenartigen Verhalten aufweist.

Aus der DE 100 53 373 A1 ist ein Verfahren zur berührungslosen Energieübertragung bekannt.

Aus der US 2 862 200 A ist eine Messapparatur zur linearen Positionsbestimmung bekannt.

Aus der DE 29 43 932 A1 ist eine Anordnung zur linearen Positionsbestimmung bekannt.

Aus der EP 0 022 363 A1 ist ein Positionssensor zur linearen Positionsbestimmung bekannt.

Aus der DE 33 09 089 A1 ist eine Vorrichtung zum Ermitteln der Stellung eines beweglichen Körpers bekannt.

Der Erfindung liegt daher die Aufgabe zugrunde, eine Bestimmung der relativen Lage zweier Teile weiterzubilden, wobei einfache und kostengünstige Mittel verwendbar sein sollen.

Erfindungsgemäß wird die Aufgabe bei dem System nach den in Anspruch 1 angegebenen Merkmalen gelöst.

Von Vorteil ist dabei, dass eine stehende Welle des Spannungsverlaufes entlang der Strecke ausgebildet ist, wenn die in die Strecke eingespeiste Wechselspannung eine konstante Amplitude aufweist. Dies bedeutet, dass die Spannungsamplitude an der jeweiligen Kapazität auftretenden Wechselspannung konstant ist und nicht zeitlich veränderlich. Ebenso ist der Stromverlauf eine stehende Welle. Dies bedeutet, dass die Amplitude des in der jeweiligen Induktivität fließenden Wechselstromes konstant ist. Als Mittel zur Bildung der Strecke sind also nur Impedanzen, wie Kapazitäten und Induktivitäten, notwendig. Somit sind kostengünstige Komponenten verwendbar, die nur auf einer Leiterplatte anzuordnen sind.

Bei einer vorteilhaften Ausgestaltung sind bei jedem Vierpol dessen unterer Eingangspol und unterer Ausgangspol miteinander elektrisch verbunden, insbesondere und mit Masse verbunden. Von Vorteil ist dabei, dass die Vierpole in einfacher Weise hintereinandergeschaltet sind.

Bei einer vorteilhaften Ausgestaltung ist der obere Eingangspol des in der Strecke jeweils nachfolgenden Vierpols mit dem oberen Ausgangspol des jeweils in der Strecke vorangehenden Vierpols verbunden. Von Vorteil ist dabei, dass eine einfache Verschaltung ausführbar ist, wobei alle Vierpole gleichartig ausgeführt sind und diese in Reihe geschaltet sind. Bei linearer Anordnung weist die Reihenschaltung ein offenes Ende und bei der Ausbildung der Strecke in Umfangsrichtung ist die Reihenschaltung ringförmig geschlossen.

Bei einer vorteilhaften Ausgestaltung ist der untere Eingangspol des jeweils in der Strecke nachfolgenden Vierpols mit dem unteren Ausgangspol des in der Strecke vorangehenden Vierpols verbunden. Von Vorteil ist dabei, dass eine einfache Verschaltung ausführbar ist.

Bei einer vorteilhaften Ausgestaltung wird die Wechselspannung der Strecke über ein Anpassmittel, insbesondere Anpassnetzwerk, zugeführt, insbesondere als Eingangsspannung eines der Vierpole der Strecke, insbesondere wobei die Eingangsspannung zwischen dem oberen und dem unteren Eingangspol des Vierpols angelegt ist. Von Vorteil ist dabei, dass eine Impedanzanpassung erfolgt und somit ein effektives Ausnutzen der Wechselspannungsquelle ausführbar ist.

Bei einer vorteilhaften Ausgestaltung ist der Ausgang des letzten Vierpols mit dem Eingang des ersten Vierpols der Strecke verbunden,
insbesondere also der obere Eingangspol des ersten Vierpols mit dem oberen Ausgangspol des letzten Vierpols der Strecke verbunden ist und der untere Eingangspol des ersten Vierpols mit dem unteren Ausgangspol des letzten Vierpols der Strecke verbunden ist. Von Vorteil ist dabei, dass eine einfache Verschaltung ausführbar ist.

Bei einer vorteilhaften Ausgestaltung ist die Strecke als Stripline, insbesondere als Kontinuum von Vierpolen ausgeführt. Von Vorteil ist dabei, dass ein einfaches und kostengünstiges Ausführen der Impedanzstrecke realisierbar ist.

Bei einer vorteilhaften Ausgestaltung entspricht der Abstand zwischen den Sensoren in Streckenrichtung einem Vierteil der Wellenlänge der stehenden Welle. Von Vorteil ist dabei, dass eine eindeutige Positionsbestimmung ausführbar ist, wenn die Grundschwingung verwendet wird, also eine Periodenlänge, die der Streckenlänge entspricht.

Bei einer vorteilhaften Ausgestaltung wird die Wechselspannung vom zweiten Teil ans andere Teil mittels eines Drehübertragers übertragen. Von Vorteil ist dabei, dass eine einfache Übertragung der Wechselspannung vom stationären ans drehende Teil ausführbar ist.

Bei einer vorteilhaften Ausgestaltung ist die Strecke, das Anpassmittel und der Sekundärteil des Drehübertragers auf einer ersten Leiterplatte des Teils angeordnet,
wobei die Wechselspannungsquelle, insbesondere Generator, sowie der Primärteil des Drehübertragers auf einer Leiterplatte angeordnet sind, die parallel zur ersten Leiterplatte ausgerichtet ist,
insbesondere wobei die Normalenrichtung der Leiterplattenebene parallel zur Drehachsrichtung ist. Von Vorteil ist dabei, dass eine einfache Ausführung ermöglicht ist, indem zwei Leiterplatte bestückt werden. Somit ist eine kostengünstige Massenfertigung ausführbar.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert Abbildungen 2 bis 5 zeigen Ausführungsbeispiele der Erfindung. Abbildung 1 zeigt ein weitere Beispiel, welches nicht unter den Schutzbereich der Erfindung fällt. Der Schutzbereich der Erfindung wird durch die Ansprüche definiert.
In der Figur 1 ist ein System zur Erfassung der relativen Lage zweier Teile dargestellt, insbesondere wobei die relative Lage der beiden Teile translatorisch erzeugt ist.
In der Figur 2 ist ein erfindungsgemäßes System zur Erfassung der relativen Lage zweier Teile dargestellt, insbesondere wobei die relative Lage der beiden Teile translatorisch erzeugt ist.
In der Figur 3 ist ein induktiv angekoppelter Sensor 30 gezeigt zur Erfassung einer induzierten Spannung.
In der Figur 4 ist die induzierte Spannung U als Funktion der relativen Lage x, also der Verschiebungswegstrecke x, der beiden Teile gezeigt.
In der Figur 5 sind zwei Sensoren (50, 51) gezeigt, so dass eine eindeutige Bestimmung der Lage ermöglicht ist, wobei eine Grundschwingung der Strecke verwendet ist.

Unter einem Kondensator C wird im Folgenden auch eine Kapazität verstanden.

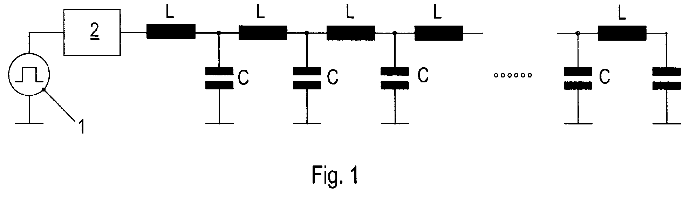

Wie in Figur 1 gezeigt, weist das System zwei relativ zueinander bewegbare Teile auf, insbesondere einen stationär angeordneten Teil und einen relativ zu diesem bewegbaren, insbesondere verschiebbaren, Teil.

Der bewegbare Teil weist eine Strecke auf, die aus Kondensatoren und Induktivitäten gebildet ist, wobei die Strecke über ein Anpassmittel 2 aus einem Spannungsgenerator 1 gespeist wird.

Die Strecke ist dabei aus Modulen aufgebaut, wobei jedes Modul eine Reihenschaltung aus einer Induktivität L und einem Kondensator C aufweist, wobei ein Anschluss des Kondensators C mit Masse verbunden ist. Dabei sind die Module hintereinander, also seriell, angeordnet, wobei die Reihenschaltung des jeweils nächsten Moduls aus der am Kondensator des vorangehenden Moduls abfallenden Spannung gespeist ist. Am Einspeisepunkt wird die Reihenschaltung des ersten Moduls über das Anpassmittel 2 aus dem Generator 1 gespeist.

Die Kondensatoren C und Induktivitäten L der Strecke sind vorzugsweise gleich dimensioniert.

Bei Einstellen eines bestimmten Frequenzwertes der vom Generator 1 erzeugten Spannung wird eine stehende Welle als Grundschwingung an der Strecke angeregt, die vorzugsweise ein Spannungsmaximum am Einspeisepunkt aufweist und in der Mitte und am Ende der Strecke. Ein Strommaximum ist vom Einspeisepunkt um ein Viertel der Streckenlänge beabstandet. Ein weiteres Strommaximum ist vom Einspeisepunkt um drei Viertel der Streckenlänge beabstandet.

Bei einem weiteren erfindungsgemäßen Ausführungsbeispiel wird alternativ oder zusätzlich zur Grundschwingung eine Oberschwingung der Strecke angeregt.

Bei einem weiteren erfindungsgemäßen Ausführungsbeispiel sind die Kondensatoren C und die Induktivitäten L der Reihenschaltungen jeweils miteinander vertauscht. Je nach Anordnung dieser Bauteile ist ein asymmetrischer oder symmetrischer Charakter der Strecke ausführbar.

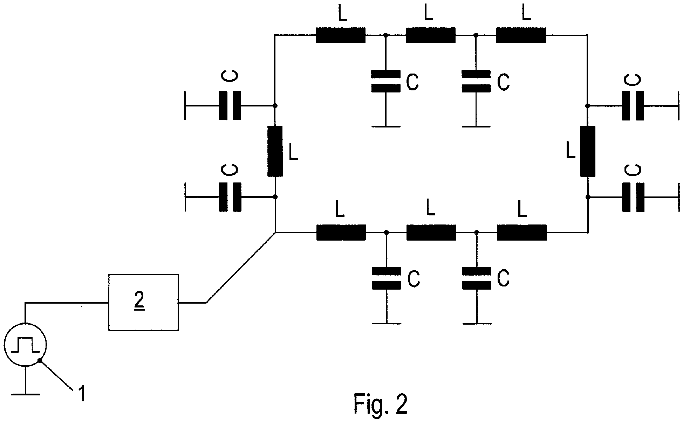

Wie in Figur 2 gezeigt, ist im dort gezeigten Ausführungsbeispiel der bewegbare Teil als rotierender Teil ausgeführt. Die Strecke ist hierbei geschlossen ausgeführt, also in Umfangsrichtung ohne Unterbrechung. Das Spannungsmaximum befindet sich beim Einspeisepunkt und bei 180°. Die Strommaxima befinden sich bei 90° und 270°.

Der rotierende Teil weist wiederum eine Strecke auf, die aus Kondensatoren C und Induktivitäten L gebildet ist, wobei die Strecke über ein Anpassmittel 2 aus einem Spannungsgenerator 1 gespeist wird.

Die Strecke ist dabei wiederum aus Modulen aufgebaut, wobei jedes Modul eine Reihenschaltung aus einer Induktivität L und einem Kondensator C aufweist, wobei ein Anschluss des Kondensators C mit Masse verbunden ist. Dabei sind die Module hintereinander, also seriell, angeordnet, wobei die Reihenschaltung des jeweils nächsten Moduls aus der am Kondensator des vorangehenden Moduls abfallenden Spannung gespeist ist. Die Reihenschaltung des in Umfangsrichtung letzte Moduls ist dabei aus der am Kondensator der Reihenschaltung des ersten Moduls gespeist. Am Einspeisepunkt wird die Reihenschaltung des ersten Moduls über das Anpassmittel 2 aus dem Generator 1 gespeist. Vorzugsweise ist der Einspeisepunkt der nicht mit Masse verbundene Anschluss eines Kondensators C, so dass also die vom Generator erzeugte Spannung über das Anpassmittel an diesen Kondensator angelegt wird.

Die Kondensatoren C und Induktivitäten L der Strecke sind vorzugsweise gleich dimensioniert.

Jedes Modul ist also als Vierpol ausgeführt, dessen unterer Eingangspol und Ausgangspol elektrisch verbunden sind und zwischen dessen oberem Eingangspol und oberem Ausgangspol eine Induktivität angeordnet ist, wobei zwischen den beiden Ausgangspolen eine Kapazität, insbesondere also Kondensator C, angeordnet ist. Der obere Eingangspol des jeweils nachfolgenden Vierpols ist mit dem oberen Ausgangspol des vorangehenden Vierpols verbunden. Der untere Eingangspol des jeweils nachfolgenden Vierpols ist mit dem unteren Ausgangspol des vorangehenden Vierpols verbunden.

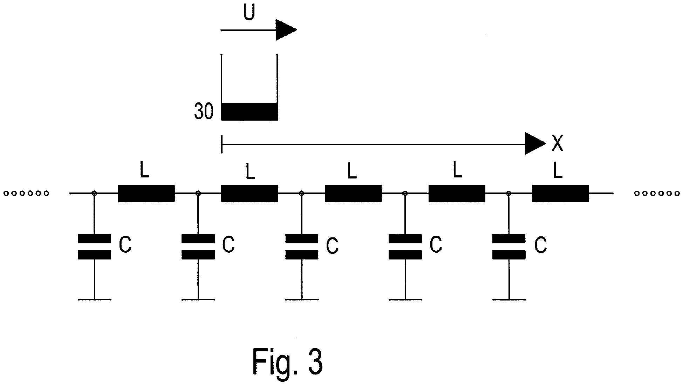

Wie in Figur 3 gezeigt, wird entlang einer der Strecken gemäß einem der vorgenannten Ausführungsbeispielen ein Sensor 30 am stationär angeordneten Teil angeordnet. Dieser Sensor 30 ist als Wicklung ausgeführt und somit induktiv an jeweils nahe, insbesondere nächstkommende, Induktivitäten ankoppelbar. Auf diese Weise entspricht der an der Wicklung auftretende Strom dem in der jeweils naheliegenden oder nächstkommenden Induktivität fließenden Strom. Um den Sensor 30 als Detektor zu nutzen, wird also die in seiner Wicklung induzierte Spannung detektiert.

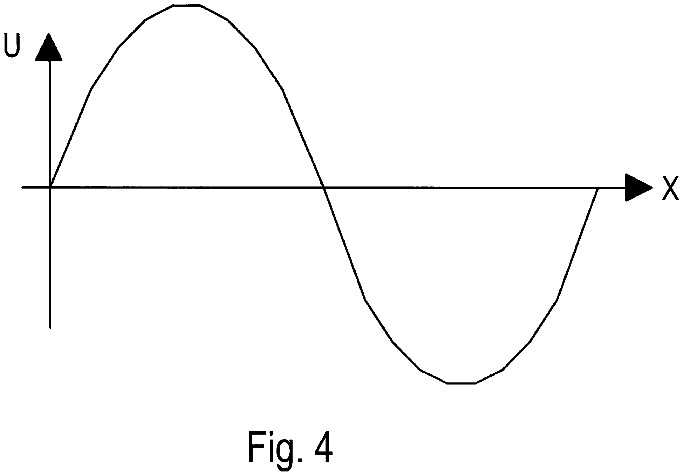

Der in Figur 4 gezeigte idealisierte Spannungsverlauf, also Verlauf der Amplitude der im Sensor 30 induzierten Wechselspannung, in Abhängigkeit von der Wegstrecke X entspricht der Grundschwingung oder Oberschwingung. Dabei ist die Nulllage in einem Spannungsminimum, also bei verschwindendem Betrag der Spannungsamplitude, angeordnet.

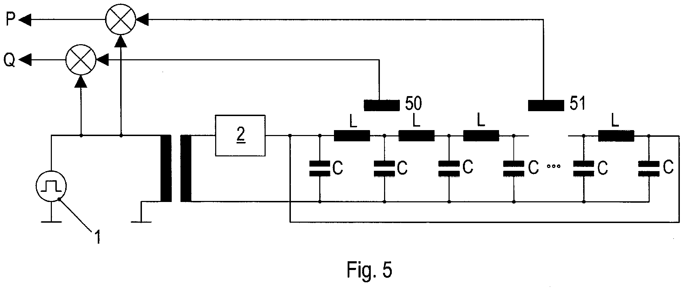

Wie in Figur 5 gezeigt sind dort zwei Sensoren (50, 51) angeordnet, deren Streckenabstand einem Viertel der Periode vorzugsweise der in der Strecke angeregten Grundschwingung entspricht.

Somit sind im Idealfall die beiden in den Sensoren (50, 51) induzierten Spannungen um 90° zueinander verschoben.

Die beiden Sensoren (50, 51) sind stationär angeordnet, also am stationären Teil. Durch jeweilige Multiplikation mit der vom Generator 1 erzeugten Spannung entstehen die Spursignale (P, Q). Diese verhalten sich im Idealfall wie ein Sinussignal und ein Kosinussignal und parametrieren somit die Winkellage des rotierenden Teils oder bei linearer Ausführung die Wegstrecke. Die jeweilige Multiplikation findet in einem jeweiligen Demodulationsmittel statt.

Wie in Figur 5 gezeigt, ist der Generator 1 auf dem stationären Teil des Systems angeordnet und versorgt die Strecke über einen Transformator und das Anpassmittel 2. Der Transformator besteht aus einer drehfest mit dem stationären Teil des Systems verbundenen Primärwicklung und einer drehfest mit dem bewegten, insbesondere rotierenden, Teil des Systems verbundenen Sekundärwicklung, die über das Anpassmittel die Strecke speist, welche ebenfalls am bewegten, insbesondere rotierenden, Teil drehfest verbunden angeordnet sind.

Bei linearer Ausführung wird statt des als Drehübertrager ausgeführten Transformators der Transformator als Lineartransformator ausgeführt.

Für die rotatorische Ausführung wird am drehbar gelagerten Teil eine erste Leiterplatte angeordnet, auf der die Reihenschaltungen in Umfangsrichtung voneinander regelmäßig beabstandet sind und denselben Radialabstand aufweisen.

Die Normalenrichtung der Leiterplattenebene entspricht dabei der Drehachsrichtung. Die Kondensatoren C und Induktivitäten L sind vorzugsweise in SMD-Technik auf der ersten Leiterplatte bestückt. Die erste Leiterplatte weist darüber hinaus das Anpassmittel 2 und eine zur Drehachsrichtung konzentrisch ausgeführte Ringwicklung auf, die als Sekundärwicklung des Drehübertragers, also Transformators, fungiert.

Eine weitere Leiterplatte ist am stationären Teil angeordnet und parallel zur ersten Leiterplatte ausgerichtet. Sie weist eine als Primärwicklung fungierende Ringwicklung auf, welche induktiv gekoppelt zur obengenannten Ringwicklung des drehbar gelagerten Teils angeordnet ist. Auf dieser weiteren Leiterplatte ist auch der Generator 1 zur Erzeugung einer Spannung U angeordnet, mit welcher die als Primärwicklung fungierende Ringwicklung speisbar ist. Des Weiteren weist die weitere Leiterplatte die Sensoren auf.

Bei einem weiteren erfindungsgemäßen Ausführungsbeispiel werden weitere Sensoren verwendet, vorzugsweise voneinander in Streckenrichtung regelmäßig beabstandete Sensoren, deren Signale interpoliert ausgewertet werden.

Bei einem weiteren erfindungsgemäßen Ausführungsbeispiel ist die Strecke nicht aus diskret angeordneten Kondensatoren C und Induktivitäten L aufgebaut, sondern als Strip-Line. Somit sind Induktivitäten und Kapazitäten kontinuierlich verteilt.

### Bezugszeichenliste

1 Generator
2 Anpassmittel, insbesondere Anpassung
30 Sensor, insbesondere Wicklung
50 Sensor, insbesondere Wicklung
51 Sensor, insbesondere Wicklung

L Induktivität
C Kapazität
X Wegstrecke, insbesondere linear oder in Umfangsrichtung
U Sensorspannung

P erstes Signal
Q zweites Signal

## Patentansprüche

1. System, bestehend aus
- einem ersten Teil,
- einem zweiten Teil,
- einer Wechselspannungsquelle,
- einer Auswerteelektronik,
- einer Strecke,
- zwei Sensoren,
zur Erfassung der relativen Lage des ersten und zweiten Teils, wobei diese relativ zueinander drehbar angeordnet sind,
wobei das zweite Teil um eine Drehachse drehbar gelagert angeordnet ist und das erste Teil stationär angeordnet ist,
wobei am zweiten Teil die Strecke angeordnet ist, die von einer Wechselspanngsquelle gespeist wird,
wobei die Strecke aus in Streckenrichtung hintereinander angeordneten und elektrisch seriell verbundenen Vierpolen zusammengesetzt ist,
insbesondere wobei der Vierpol einen unteren und einen oberen Eingangspol und einen unteren und einen oberen Ausgangspol aufweist,
wobei bei jedem Vierpol zwischen dessen oberem Eingangspol und oberem Ausgangspol eine Induktivität angeordnet ist, wobei zwischen den beiden Ausgangspolen des Vierpols eine Kapazität, also Kondensator C, angeordnet ist,
wobei die Induktivitäten der Vierpole auf demselben Radialabstand zur Drehachse des zweiten Teils angeordnet sind,
wobei die Frequenz der von der Wechselspannungsquelle erzeugten Wechselspannung derart vorgegeben ist, dass auf der Strecke eine stehende Welle angeregt wird und/oder dass der Verlauf einer Spannungsamplitude in Streckenrichtung eine stehende Welle, insbesondere als Grundschwingung oder Oberschwingung, ist,
wobei am ersten Teil die beiden Sensoren (50, 51) angeordnet sind, die mit einer Auswerteelektronik verbunden sind,
wobei die Auswerteelektronik ein dem jeweiligen Sensor (50, 51) zugeordnetes Mittel zur Multiplikation des Ausgangssignals des jeweiligen Sensors (50, 51) mit einem der Wechselspannung entsprechenden Signal aufweist,
wobei das zweite Teil eine erste Leiterplatte aufweist, welche mit den Kondensatoren C und Induktivitäten L bestückt ist,
wobei mittels einer der Sensoren (50, 51) der durch die Induktivität eines der Vierpole fließende Strom bestimmbar ist,
wobei mittels des anderen der Sensoren (50, 51) der durch die Induktivität eines anderen der Vierpole fließende Strom bestimmbar ist,
wobei der jeweilige Sensor (50, 51) eine Induktivität aufweist, die induktiv an die Induktivität des jeweiligen Vierpols koppelbar ist, insbesondere zumindest zeitabschnittsweise.

2. System nach Anspruch 1,
**dadurch gekennzeichnet, dass**
bei jedem Vierpol dessen unterer Eingangspol und unterer Ausgangspol miteinander elektrisch verbunden sind, insbesondere und mit Masse verbunden sind.

3. System nach mindestens einem der vorangegangenen Ansprüche,
**dadurch gekennzeichnet, dass**
der obere Eingangspol des in der Strecke jeweils nachfolgenden Vierpols mit dem oberen Ausgangspol des jeweils in der Strecke vorangehenden Vierpols verbunden ist.

4. System nach mindestens einem der vorangegangenen Ansprüche,
**dadurch gekennzeichnet, dass**
der untere Eingangspol des jeweils in der Strecke nachfolgenden Vierpols ist mit dem unteren Ausgangspol des in der Strecke vorangehenden Vierpols verbunden.

5. System nach mindestens einem der vorangegangenen Ansprüche,
**dadurch gekennzeichnet, dass**
die Wechselspannung der Strecke über ein Anpassmittel (2), insbesondere Anpassnetzwerk, zugeführt wird, insbesondere als Eingangsspannung eines der Vierpole der Strecke, insbesondere wobei die Eingangsspannung zwischen dem oberen und dem unteren Eingangspol des Vierpols angelegt ist.

6. System nach mindestens einem der vorangegangenen Ansprüche,
**dadurch gekennzeichnet, dass**
der Ausgang des letzten Vierpols mit dem Eingang des ersten Vierpols der Strecke verbunden ist,
insbesondere also der obere Eingangspol des ersten Vierpols mit dem oberen Ausgangspol des letzten Vierpols der Strecke verbunden ist und der untere Eingangspol des ersten Vierpols mit dem unteren Ausgangspol des letzten Vierpols der Strecke verbunden ist.

7. System nach mindestens einem der vorangegangenen Ansprüche,
**dadurch gekennzeichnet, dass**
die Strecke als Stripline, insbesondere als Kontinuum von Vierpolen ausgeführt ist.

8. System nach mindestens einem der vorangegangenen Ansprüche,
**dadurch gekennzeichnet, dass**
der Abstand zwischen den Sensoren (50, 51) in Streckenrichtung einem Viertel der Wellenlänge der stehenden Welle entspricht,
und/oder dass
die Wechselspannung vom zweiten Teil ans andere Teil mittels eines Drehübertragers übertragen wird.

9. System nach mindestens einem der vorangegangenen Ansprüche,
**dadurch gekennzeichnet, dass**
die Vierpole jeweils auf demselben Radialabstand zur Drehachse des Teils angeordnet sind.

10. System nach mindestens einem der vorangegangenen Ansprüche,
**dadurch gekennzeichnet, dass**
die Strecke, das Anpassmittel (2) und der Sekundärteil des Drehübertragers auf der ersten Leiterplatte des Teils angeordnet sind,
wobei die Wechselspannungsquelle, insbesondere Generator (1), sowie der Primärteil des Drehübertragers auf einer zweiten Leiterplatte angeordnet sind, die parallel zur ersten Leiterplatte ausgerichtet ist,
insbesondere wobei die Normalenrichtung der Leiterplattenebene parallel zur Drehachsrichtung ist.

## Claims

1. System, consisting of
- a first part,
- a second part,
- an alternating voltage source,
- evaluation electronics,
- a section,
- two sensors,
for detecting the relative position of the first and second part, wherein these are arranged in such a way as to be rotatable relative to one another,
wherein the second part is arranged in a rotatably mounted manner about an axis of rotation, and the first part is arranged in a stationary manner,
wherein the section is arranged on the second part, said section being fed by an alternating voltage source,
wherein the section is composed of quadrupoles which are arranged one behind the other in the direction of the section and which are electrically connected in series,
in particular wherein the quadrupole has a lower and an upper input pole and a lower and an upper output pole, wherein, on each quadrupole, an inductor is arranged between the upper input pole and upper output pole thereof, with a capacitor, that is to say capacitor C, being arranged between the two output poles of the quadrupole,
wherein the inductors of the quadrupoles are arranged at the same radial distance from the axis of rotation of the second part,
wherein the frequency of the alternating voltage generated by the alternating voltage source is predefined such that a standing wave is excited on the section, and/or such that the curve of a voltage amplitude in the direction of the section is a standing wave, in particular in the form of the fundamental or harmonic,
wherein the two sensors (50, 51) are arranged on the first part, said sensors being connected to evaluation electronics, wherein the evaluation electronics has a means, assigned to the respective sensor (50, 51), for multiplying the output signal of the respective sensor (50, 51) by a signal corresponding to the alternating voltage,
wherein the second part has a first printed circuit board which is populated with the capacitors C and inductors L,
wherein the current flowing through the inductor of one of the quadrupoles can be determined by one of the sensors (50, 51), wherein the current flowing through the inductor of another of the quadrupoles can be determined by the other of the sensors (50, 51),
wherein the respective sensor (50, 51) has an inductor which can be inductively coupled to the inductor of the respective quadrupole, in particular at least during one or more time intervals.

2. System according to claim 1,
**characterized in that**,
on each quadrupole, the lower input pole and lower output pole thereof are electrically connected to one another, in particular and are connected to ground.

3. System according to at least one of the preceding claims,
**characterized in that**
the upper input pole of the quadrupole that respectively follows in the section is connected to the upper output pole of the quadrupole that respectively precedes in the section.

4. System according to at least one of the preceding claims,
**characterized in that**
the lower input pole of the quadrupole that respectively follows in the section is connected to the lower output pole of the quadrupole that precedes in the section.

5. System according to at least one of the preceding claims,
**characterized in that**
the alternating voltage of the section is supplied via a matching means (2), in particular a matching network, in particular in the form of the input voltage of one of the quadrupoles of the section,
in particular wherein the input voltage is applied between the upper and the lower input pole of the quadrupole.

6. System according to at least one of the preceding claims,
**characterized in that**
the output of the last quadrupole is connected to the input of the first quadrupole of the section,
that is to say in particular the upper input pole of the first quadrupole is connected to the upper output pole of the last quadrupole of the section, and the lower input pole of the first quadrupole is connected to the lower output pole of the last quadrupole of the section.

7. System according to at least one of the preceding claims,
**characterized in that**
the section is designed as a stripline, in particular as a continuum of quadrupoles.

8. System according to at least one of the preceding claims,
**characterized in that**
the distance between the sensors (50, 51) in the direction of the section corresponds to one quarter of the wavelength of the standing wave,
and/or **in that**
the alternating voltage is transmitted from the second part to the other part by means of a rotary transmitter.

9. System according to at least one of the preceding claims,
**characterized in that**
the quadrupoles are each arranged at the same radial distance from the axis of rotation of the part.

10. System according to at least one of the preceding claims,
**characterized in that**
the section, the matching means (2) and the secondary part of the rotary transmitter are arranged on the first printed circuit board of the part,
wherein the alternating voltage source, in particular generator (1), and the primary part of the rotary transmitter are arranged on a second printed circuit board, which is oriented parallel to the first printed circuit board,
in particular wherein the normal direction of the printed circuit board plane is parallel to the direction of the axis of rotation.

## Revendications

1. Système, composé de
- une première partie,
- une deuxième partie,
- une source de tension alternative,
- une électronique d'interprétation,
- un segment,
- deux capteurs,
destinés à détecter la position relative de la première et de la deuxième partie, celles-ci étant montées rotatives l'une par rapport à l'autre,
la deuxième partie étant disposée supportée à rotation autour d'un axe de rotation et la première partie étant disposée en position fixe,
le segment, qui est alimenté par la source de tension alternative, étant disposé au niveau de la deuxième partie,
le segment étant constitué de quadripôles disposés les uns derrière les autres dans la direction du segment et reliés électriquement en série,
le quadripôle possédant notamment un pôle d'entrée inférieur et un pôle d'entrée supérieur ainsi qu'un pôle de sortie inférieur et un pôle de sortie supérieur,
une inductance étant disposée au niveau de chaque quadripôle entre son pôle d'entrée supérieur et son pôle de sortie supérieur, une capacité, c'est-à-dire un condensateur C, étant disposée entre les deux pôles de sortie du quadripôle,
les inductances des quadripôles étant disposées au même écart radial par rapport à l'axe de rotation de la deuxième partie,
la fréquence de la tension alternative générée par la source de tension alternative étant conçue de telle sorte qu'une onde stationnaire est excitée sur le segment et/ou de telle sorte que la courbe d'une amplitude de tension dans la direction du segment est une onde stationnaire, notamment sous la forme d'une oscillation fondamentale ou d'une oscillation harmonique,
les deux capteurs (50, 51), qui sont reliés à une électronique d'interprétation, étant disposés au niveau de la première partie,
l'électronique d'interprétation possédant un moyen associé au capteur (50, 51) respectif servant à la multiplication du signal de sortie du capteur (50, 51) respectif par un signal correspondant à la tension alternative,
la deuxième partie possédant un premier circuit imprimé qui est équipé des condensateurs C et d'inductances L, le courant qui circule à travers l'inductance de l'un des quadripôles pouvant être déterminé au moyen de l'un des capteurs (50, 51),
le courant qui circule à travers l'inductance d'un autre des quadripôles pouvant être déterminé au moyen de l'autre des capteurs (50, 51),
le capteur (50, 51) respectif possédant une inductance qui peut être couplée inductivement à l'inductance du quadripôle respectif, notamment au moins par intervalles de temps.

2. Système selon la revendication 1, **caractérisé en ce que** sur chaque quadripôle, son pôle d'entrée inférieur et son pôle de sortie inférieur sont reliés électriquement l'un à l'autre, et sont notamment reliés à la masse.

3. Système selon au moins l'une des revendications précédentes, **caractérisé en ce que** le pôle d'entrée supérieur du quadripôle respectivement suivant dans le segment est relié au pôle de sortie supérieur du quadripôle respectivement précédent dans le segment.

4. Système selon au moins l'une des revendications précédentes, **caractérisé en ce que** le pôle d'entrée inférieur du quadripôle respectivement suivant dans le segment est relié au pôle de sortie inférieur du quadripôle respectivement précédent dans le segment.

5. Système selon au moins l'une des revendications précédentes, **caractérisé en ce que** la tension alternative est acheminée au segment par le biais d'un moyen d'adaptation (2), notamment un réseau d'adaptation, notamment sous la forme d'une tension d'entrée de l'un des quadripôles du segment, la tension d'entrée étant notamment appliquée entre les pôles d'entrée supérieur et inférieur du quadripôle.

6. Système selon au moins l'une des revendications précédentes, **caractérisé en ce que** la sortie du dernier quadripôle est reliée à l'entrée du premier quadripôle du segment, c'est-à-dire notamment le pôle d'entrée supérieur du premier quadripôle est relié au pôle de sortie supérieur du dernier quadripôle du segment et le pôle d'entrée inférieur du premier quadripôle est relié au pôle de sortie inférieur du dernier quadripôle du segment.

7. Système selon au moins l'une des revendications précédentes, **caractérisé en ce que** le segment est réalisé sous la forme d'un guide d'ondes à ruban, notamment sous la forme d'un continuum de quadripôles.

8. Système selon au moins l'une des revendications précédentes, **caractérisé en ce que**
l'écart entre les capteurs (50, 51) dans la direction du segment correspond à un quart de la longueur d'onde de l'onde stationnaire,
et/ou **en ce que**
la tension alternative est transmise de la première partie à l'autre partie au moyen d'un transmetteur rotatif.

9. Système selon au moins l'une des revendications précédentes, **caractérisé en ce que** les quadripôles sont respectivement disposés au même écart radial par rapport à l'axe de rotation de la partie.

10. Système selon au moins l'une des revendications précédentes, **caractérisé en ce que**
le segment, le moyen d'adaptation (2) et la partie secondaire du transmetteur rotatif sont disposés sur le premier circuit imprimé de la partie,
la source de tension alternative, notamment un générateur (1), ainsi que la partie primaire du transmetteur rotatif étant disposées sur un deuxième circuit imprimé qui est orienté parallèlement au premier circuit imprimé,
la direction de la normale au plan des circuits imprimés étant notamment parallèle à la direction de l'axe de rotation.
